# EUROPEAN PATENT SPECIFICATION

(11) **EP 3 446 917 B1**
(45) Date of publication and mention of the grant of the patent: **26.01.2022**
(21) Application number: 18186567.6
(22) Date of filing: 31.07.2018
(51) Int. Cl.: B60N 2/00, B60N 2/28, G08B 21/02, G08B 21/22, G08B 21/24

(54) **CHILD ABANDONMENT MONITOR**
KINDERVERNACHLÄSSIGUNGSMONITOR
MONITEUR D'ABANDON D'ENFANT

(30) Priority: 15.08.2017 US 201715677722
(43) Date of publication of application: 27.02.2019
(73) Proprietor: Baby Trend, Inc., Fontana, CA 92335 (US)
(72) Inventor: Mattarocci, Bradley James, Rancho Cucamonga, CA 91739 (US)
(74) Representative: Roberts, Peter David

(56) References cited:
- WO-A1-2015/193884
- WO-A1-2017/004587
- US-A1- 2002 161 501
- US-A1- 2013 049 955
- US-A1- 2016 078 737
- US-B1- 8 659 414

## Description

### Field of the Disclosure

The present disclosure generally relates to systems and methods for monitoring whether a child has been abandoned, and more specifically to a car seat system which alerts a caregiver when a child is left in the car seat and the caregiver has moved away from the car seat.

### Background

Small children (e.g., babies and infants) are normally unable to release themselves from the harness of a car seat. As such, small children secured in a car seat must depend on a caregiver to uncouple the car seat harness and remove them from the car seat, or to remove all or a portion of the car seat with the child still secured therein. Unfortunately, caregivers occasionally (intentionally or unintentionally) leave a child strapped in a car seat in the vehicle while the caregiver shops at a store or engages in some other activity. This may be fatal for the child, who may suffer from heat stroke and/or dehydration, or be abducted. Accordingly, it is highly desirable to provide a system that alerts the caregiver and/or others when a child remains strapped in a car seat and the caregiver moves an unacceptable distance away from the car seat containing the child.

Additionally, many consumer products such as car seats are occasionally the subject of product recalls or other safety-related communications. Conventional methods for communicating recall or other information to consumers rely on mass media and public notices. For products such as car seats, the information is generally not directly provided to the consumer, leaving the significant possibility that such information may never reach the affected consumers. Accordingly, there is a need to provide a registration and notification system for communicating information related to products such as car seats directly to the purchasers.

WO2017/004587 A1 discloses methods and systems for detection of removable vehicle seats which can be used to indicate presence or absence of a child in the vehicle. In some examples, an alarm system includes a radio frequency (RF) transceiver and a removable seat magnetic coupling. Various actions are triggered when the parent (e.g., guardian) goes beyond a predefined range while the removable seat is within the vehicle, such as sounding an alarm on a mobile electronic device.

### Summary

The child car seat according to the invention comprises the features of claim 1. The child car seat comprises a base configured to couple to a vehicle seat; a seat configured to couple to the base; and a sensor device mounted to one of the base or the seat, the sensor device including a sensor that outputs a measurement signal indicating whether a child is present in the seat, a processor configured to receive the measurement signal and to determine, based on the measurement signal, whether a child is present in the seat, and a communication circuit controlled by the processor, the communication circuit transmitting a proximity signal in response to the processor determining that a child is present in the seat, the proximity signal being configured for reception by a first mobile device; wherein the proximity signal causes a first alert to be communicated to a user of a first mobile device in response to the first mobile device exceeding a range from the sensor device; and wherein a second alert is communicated to the user of a second mobile device if, after a threshold amount of time, the measurement signal continues to indicate that a child is present in the seat and no response is received by the sensor device in response to the first alert. The seat comprises a harness having a chest clip, the sensor device being housed in the chest clip. The chest clip comprises a tongue and a buckle, the sensor device being housed within a housing of the tongue. The processor is configured to receive an environmental measurement from an environmental sensor, the environmental sensor generating an environmental measurement representative of an environmental condition, and to determine whether the environmental measurement exceeds a maximum environmental measurement safety threshold. The processor is configured to respond to a determination that the environmental measurement exceeds the maximum environmental measurement safety threshold by reducing the first threshold amount of time. In one aspect of this embodiment, a third alert is communicated to an emergency service if, after a second threshold amount of time, the measurement signal continues to indicate that a child is present in the seat and no response is received by the sensor device in response to either the first alert or the second alert. In another aspect, the sensor device is mounted to the base. Another aspect of this embodiment further comprises an indicator on at least one of the base and the seat, the indicator being detectable by the first mobile device, wherein detection of the indicator causes the first mobile device to obtain software that provides for linking the first mobile device to the sensor device. In a variant of this aspect, linking the first mobile device to the sensor device provides for the first mobile device to receive safety information from a manufacturer of the car seat. In another aspect, the sensor device is programmed to transmit an alert to a vehicle alarm system to generate a vehicle alarm. The environmental measurement may be at least one of a humidity measurement and a temperature measurement. In another aspect, the communication circuit is configured to communicate based on a wireless communication standard. In a variant of this aspect, the wireless communication standard is based on at least one of a BTLE standard, an IEEE 802.15.1 standard, and an IEEE 802.15.4 standard.

The invention also refers to a method comprising the features of claim 10. It provides a method for child car seat proximity detection executing on a specifically programmed processor coupled to the child car seat, comprising: generating a proximity indication representative of a proximity of a first mobile device to the child car seat; determining, based on the proximity indication, that the first mobile device has exceeded a threshold range from the child car seat; generating a first abandonment alert indicating that the first mobile device has exceeded the threshold range from the child car seat; communicating the first abandonment alert to the first mobile device; determining that a first threshold amount of time, during which the first mobile device continues to exceed the threshold range from the child car seat, has passed without a response from the first mobile device; and responding to a determination that the first threshold amount of time, during which the first mobile device continues to exceed the threshold range from the child car seat, has passed without a response from the first mobile device by communicating a second abandonment alert to a second mobile device. The method further comprises: generating an environmental measurement representative of an environmental condition via an environmental sensor; determining that the environmental measurement exceeds a maximum environmental measurement safety threshold; and responding to a determination that the environmental measurement exceeds the maximum environmental measurement safety threshold by reducing the first threshold amount of time. In one aspect of this embodiment, the method further comprises determining that a second threshold amount of time, during which the first mobile device continues to exceed the threshold range from the child car seat, has passed without a response from either the first mobile device or the second mobile device; and responding to a determination that the second threshold amount of time, during which the first mobile device continues to exceed the threshold range from the child car seat, has passed without a response from either the first mobile device or the second mobile device by communicating a third abandonment alert to an emergency service. Another aspect further comprises responding to a determination that the first threshold amount of time, during which the first mobile device continues to exceed the threshold range from the child car seat, has passed without a response from the first mobile device by generating an alert to a vehicle alarm system to generate a vehicle alarm. In another aspect, the proximity indication includes a received signal strength indicator (RSSI). In yet another aspect, The environmental measurement may be at least one of a humidity measurement and a temperature measurement.

An example of the present disclosure provides a system for preventing abandonment of a child in a vehicle car seat, comprising: a car seat having a harness with a chest clip housing a sensor device, the sensor device being configured to detect the presence of a child in the car seat; and a mobile device in communication with the sensor device; wherein the sensor device responds to detecting the presence of a child in the car seat by transmitting a proximity signal to the mobile device; and wherein the mobile device generates, based on the proximity signal, a first alert when the mobile device exceeds a first range of the sensor device and generates, based on the proximity signal, a second alert when the mobile device exceeds a second range of the sensor device. In one aspect of this example, the mobile device generates the first alert and the second alert based on a signal strength of the proximity signal.

### Brief Description of the Drawings

The above-mentioned aspects and examples of the present teachings and the manner of obtaining them will become more apparent, and the teachings will be better understood by reference to the following description of the embodiments and examples taken in conjunction with the accompanying drawings, wherein:
FIG. 1 is a perspective view of a removable vehicle seat detection system, according to one example;
FIG. 2 is a conceptual diagram of a sensing device in communication with mobile devices;
FIG. 3 is a block diagram of an example child detection system, according to some embodiments;
FIG. 4 is a block diagram of a computer system to implement the child detection system, according to some embodiments;
FIG. 5 is a flowchart of an alert escalation method, according to some embodiments;
FIG. 6 is a perspective view of a chest clip having a sensing device according to another embodiment of the disclosure;
FIG. 7 is a top view of a latch of the chest clip of FIG. 6;
FIG. 8 is an end view of the latch of FIG. 7;
FIG. 9 is a side view of the latch of FIG. 7; and
FIG. 10 is a perspective view of the chest clip of FIG. 6.

### Detailed Description of Embodiments of the Disclosure

In the following description, reference is made to the accompanying drawings that form a part hereof, and in which are shown by way of illustration specific embodiments and examples that may be practiced. These embodiments and examples are described in sufficient detail to enable those skilled in the art to practice the invention, and it is to be understood that other embodiments may be used and that structural, logical, and electrical changes may be made without departing from the scope of the present invention as recited in the claims. The following description of example embodiments is, therefore, not to be taken in a limited sense, and the scope of the present invention is defined by the appended claims.

The functions or algorithms described herein may be implemented in software or a combination of software and human implemented procedures in one embodiment. The software may consist of computer executable instructions stored on computer readable media such as memory or other type of non-transitory storage device. Further, such functions correspond to specifically programmed modules, which are software, hardware, firmware, or any combination thereof. Multiple functions may be performed in one or more modules as desired, and the embodiments described are merely examples. The software may be executed on a digital signal processor, ASIC, microprocessor, or other type of specifically programmed processor operating on a computer system, such as a personal computer, server, or other computer system. Described herein are methods and systems for detecting the presence of a child and alerting a caregiver of certain conditions, including information related to the product.

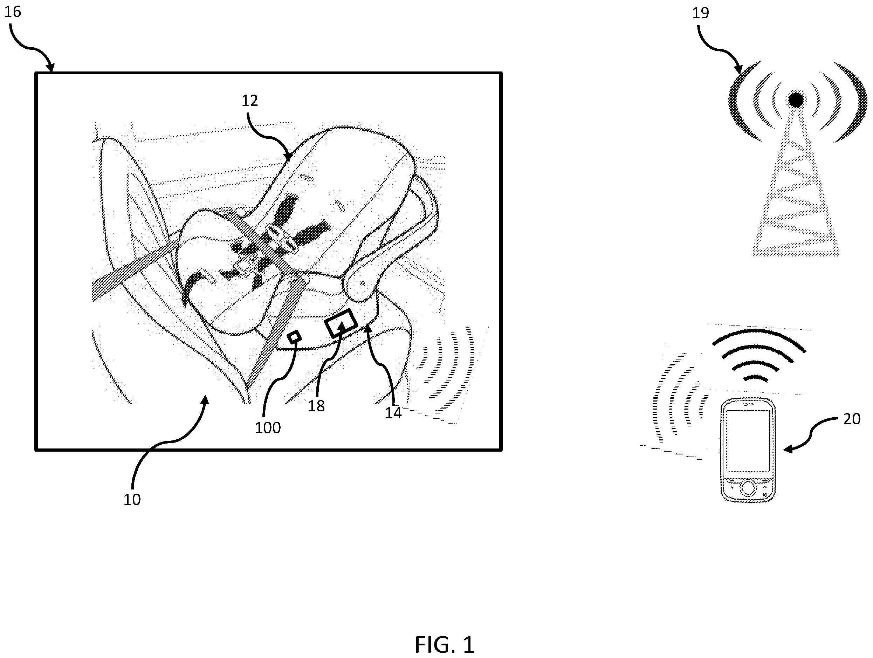

FIG. 1 is a perspective view of an example of a child vehicle seat system 10. System 10 includes a removable seat 12 and seat base 14. Base 14 is installed in the vehicle 16 and may remain in vehicle 16 at the user's preference. Removable seat 12 securely fastens to base 14, and seat 12 may be removed from vehicle 16 without removing a child from seat 12. System 10 in certain embodiments includes a sensor device 18 which may be integral in base 14 or attached to base 14. Other embodiments are envisioned where sensor device 18 is separate from base 14. Such embodiments may have a sensor device in vehicle 16 generally, in removable seat 12, and/or otherwise.

When used in removable vehicle seats, such as those designed for children, sensor device 18 operates to determine if a child is within vehicle 16. In one embodiment, sensor device 18 includes a sensor 21 such as a magnetic detection sensor, such as a Hall Effect sensor that outputs a voltage in response to a magnetic field which may be different with a child present than with the child absent. In one example, sensor device 18 generates a binary proximity signal to indicate whether seat 12 is in sufficiently close proximity to base 14, such as comparing a Hall Effect sensor voltage against a minimum voltage threshold. In other examples, sensor 21 is a load cell that measures weight. In some examples, seat 12 must be snapped into or otherwise connected to base 14 for sensor 21 to provide a signal indicating that seat 12 is in sufficiently close proximity to base 14. The proximity signal may be used to determine if removable seat 12 has been separated from base 14, which may be used by system 10 to infer that a child in seat 12 is no longer within vehicle 16. In one example, sensor 21 may include a magnetic reed switch that opens when seat 12 is removed from base 14. It should be understood that in various examples, sensor 21 may be used to determine if seat 12 is in close proximity to base 14 and/or to determine if a child is in close proximity to seat 12 and/or base 14.

In certain embodiments, sensor 21 may include a capacitive sensor, Doppler Effect sensor, eddy-current sensor, inductive sensor, laser rangefinder sensor, magnetic sensor, optical sensor, thermal infrared sensor, photocell sensor, radar sensor, ionizing radiation reflection sensor, sonar sensor, ultrasonic sensor, fiber optics sensor, or another proximity sensor.

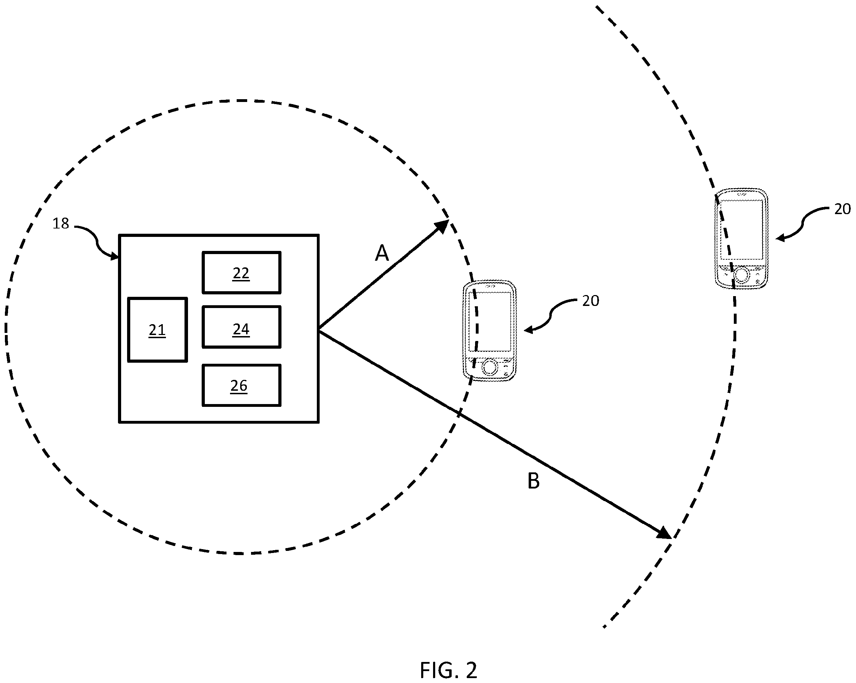

As shown in FIG. 2, sensor device 18 generally includes a sensor 21, a processor 22, an RF communication circuit 24 and a power source 26. In various examples, sensor device 18, via the RF circuit 24, transmits proximity signals to mobile electronic device 20, to a vehicle computer system, or to another device such as cell tower 19 (FIG. 1). RF circuit 24 may transmit signals in accordance with a low power wireless transmission standard, such as Bluetooth Low Energy (BTLE), IEEE 802.15.1, IEEE 802.15.4, or other standards. The RF circuit 24 may be paired with one or more mobile electronic device 20 and/or with vehicle 16 to establish such communications.

In some embodiments, sensor device 18 receives a raw sensor measurement from sensor 21, interprets the raw measurement as an indication of whether seat 12 and/or a child in seat 12 is present in vehicle, formats the interpreted data, and transmits the formatted data. For example, a sensor measurement may include a voltage level received from a Hall Effect sensor, and the voltage level may be compared against a voltage threshold to generate a binary magnetic proximity signal indicating that seat 12 is securely fastened within vehicle 16. In other embodiments, sensor device 18 receives and transmits the raw measurement to device 20, and device 20 interprets the raw measurement. In still other embodiments, sensor device 18 receives and interprets the raw measurement, and transmits both the raw measurement and the interpreted measurement to device 20. The raw and interpreted measurements may be received by processor 22 and converted into a data format that is compatible with the target device, such as using a data format compatible with an application running on mobile device 20 or a data format compatible with a vehicle computer system.

Referring again to FIG. 2, a system is shown depicting sensor device 18 communicating with a mobile device 20 shown in two different positions. In this example, when sensor device 18 determines that seat 12 remains attached to base 14 (or otherwise infers or directly measures the presence of a child in vehicle 16) and mobile device 20 moves away from sensor device 18, sensor device 18 may communicate a signal to mobile device 20. Mobile device 20 may evaluate the signal based on its strength as is further described herein. The distance "A" shown in FIG. 2 represents a strength of the signal from sensor device 18 falling below a first threshold. For example, when the signal strength falls below the first threshold, mobile device 20 may be 1 to 2 feet from sensor device 18. This may result in a first notification to the user of mobile device 20 reminding the user not to leave a child in seat 12. The first notification may be a relatively subtle reminder that the child is in seat 12 (e.g., a vibration on mobile device 20). When mobile device 20 is moved farther from sensor device 18, the strength of the signal received by mobile device 20 from sensor device 18 may drop below a second threshold. For example, when the signal strength drops below the second threshold, the mobile device may be distance "B" from sensor device (e.g., 30-50 feet). This may result in a second, more urgent notification to the user of mobile device 20 reminding the user not to leave a child in seat 12. More or fewer than two thresholds may be used, and the strength of the signal emitted by sensor device 18 may be enhanced in some embodiments using an RF power amplifier.

In other embodiments, mobile device 20 may determine when it no longer receives a signal from sensor device 18 (i.e., it is out of range of sensor device 18). When this occurs, mobile device 20 may generate a notification to the user indicating that a signal was received from sensor device 18 (indicating that a child remains in seat 12), and mobile device 20 has moved too far from sensor device 18. The user is thus reminded to return to the child. In other embodiments, GPS may be used to determine the relative locations of sensor device 18 and mobile device 20. When mobile device 20 receives a signal from sensor device 18 and then moves (as determined by the GPS system) an unacceptable distance from sensor device 18, mobile device 20 may generate a notification to the user prompting the user to return to the child. Other location systems such as cellular tower triangulation or Wi-Fi access point triangulation may be used.

The notification to the user may include a visible alert, an audible alert, a tactile alert (e.g., vibration), a text or e-mail message, or other alert. In some examples, mobile device 20 may include a mobile device processor, where the processor is executing foreground or background software to generate a visible or audible alarm, and mobile device 20 may include speakers or other hardware or circuitry to generate the alarm. In some examples, sensor device 18, seat 12, base 14 and/or vehicle 16 may generate an alarm instead of or in addition to the notification generated by mobile device 20. Seat 12, base 14 or sensor device 18 may generate the alarm using internal alarm circuitry or cause vehicle 16 to generate the alarm by sending a signal to a vehicle alarm system. One or more alarms may be used in combination to increase the probability that a user is notified.

It should be understood that in various embodiments, sensor device 18 may detect the proximity of mobile device 20, mobile device 20 may detect the proximity of sensor device 18, or both devices may detect the proximity of the other. In response to a determination by either device (or both) that the relative proximity is unacceptable (via signal strength analysis or otherwise), coupled with a determination by sensor device 18 that a child remains in vehicle 16, either mobile device 20 or sensor device 18 (or both) may generate the notifications described above. Additionally, sensor device 18 may communicate with vehicle 16 to cause vehicle 16 to generate a notification.

The above-described system may use various features of vehicle 16. A vehicle alarm system may be used to notify the user, such as honking the horn or flashing lights to indicate an abandonment alert. A vehicle equipped with a roadside emergency service system may contact the service to request help or to initiate a phone call with an operator (via cell tower 19) to determine if a child is within vehicle 16. Vehicle 16 may also provide an indication of vehicle speed or movement, and sensor device 18 may enter a reduced power (e.g., sleep) mode when vehicle 16 is moving to extend the useful life of power source 26. Vehicle 16 may also provide an environmental response to an abandonment alert, such as opening car windows or turning on air conditioning. Vehicle 16 may also provide an environmental input, such as temperature, humidity, or other environmental measurement, using environmental sensors as described below.

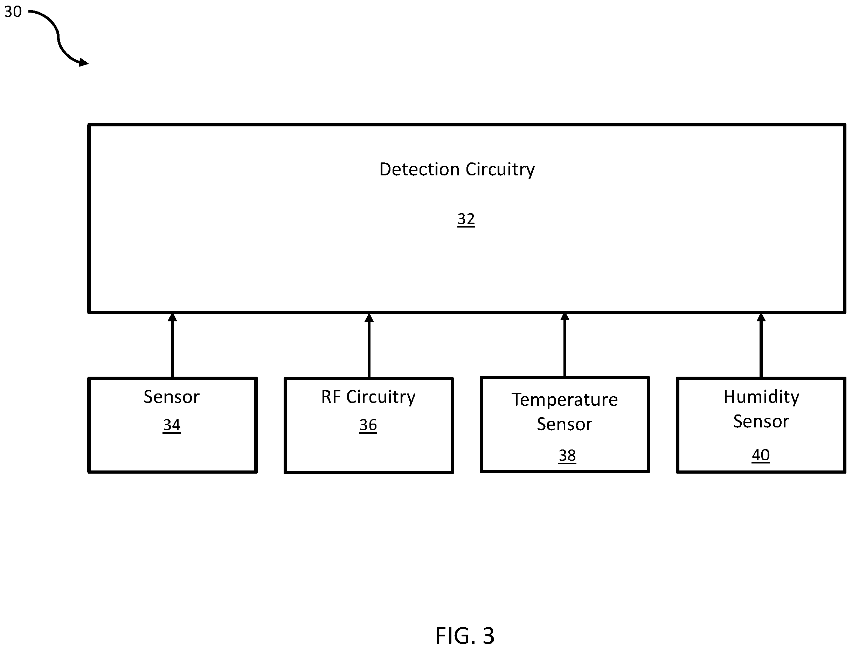

Referring now to FIG. 3, a block diagram of a detection system 30 is shown. System 30 includes detection circuitry 32, where detection circuitry 32 may include sensor device 18, a mobile device processor, a dedicated integrated circuit (IC), or other circuit. Detection circuitry 32 may receive magnetic proximity signals from a sensor 34. Detection circuitry 32 may receive RF proximity signals from RF circuitry 36, where the RF proximity signals indicate RF proximity between the RF proximity sensor 36 and a mobile device 20. Detection circuitry 32 may also use RF circuitry 36 to communicate with mobile device 20, including sending or receiving notifications, alerts or proximity information.

Detection circuitry 32 may also receive various other inputs, such as an input from a temperature sensor 38 or from a humidity sensor 40. Detection circuitry 32 may combine inputs from various sensors to generate various alerts. For example, detection circuitry 32 may use a sensor 34 input to determine that a removable vehicle seat is within a vehicle, and may warn a user when the temperature sensor 38 and humidity sensor 40 indicate an unsafe environment within vehicle 16.

Components of the removable seat proximity detection circuitry 32 may be implemented on two or more devices. In an example, a removable vehicle seat may be manufactured to include a detectable element, and a removable vehicle seat base may be manufactured to include the detection circuitry 32, sensor 34, RF circuitry 36, temperature sensor 38, and humidity sensor 40 or a subset of the same. In other embodiments, RF circuitry 36, temperature sensor 38, or humidity sensor 40 may be implemented in a mobile device 20, in vehicle 16, or in another device.

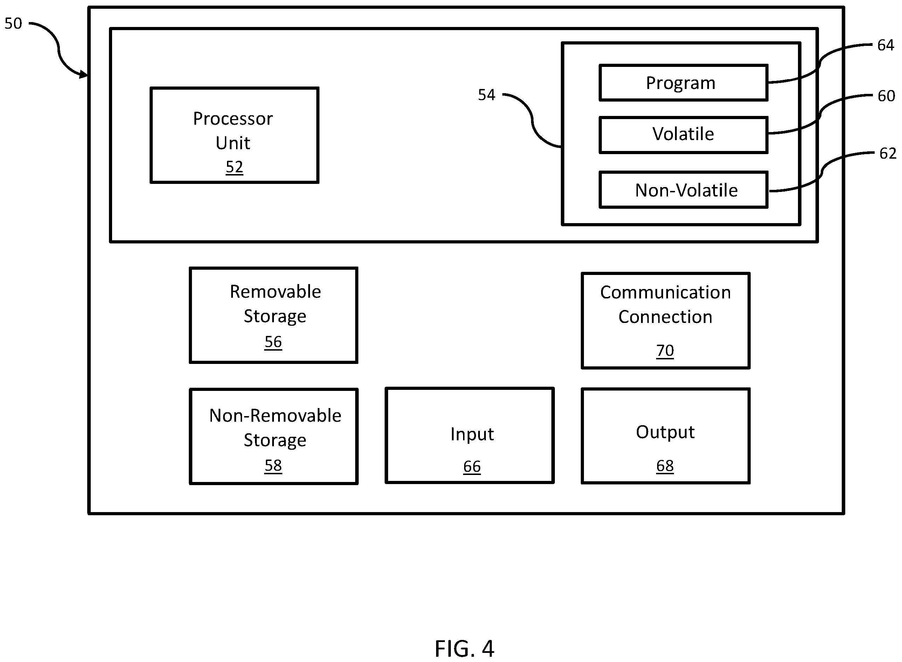

FIG. 4 is a block diagram of a computer system 50 to implement removable seat detection system 30, according to some embodiments. Computer system 50 may use fewer or more components than shown in FIG. 4 in some embodiments to perform the methods described. One example computing device in the form of computer 50, may include a processing unit 52, memory 54, removable storage 56, and non-removable storage 58. Memory 54 may include volatile memory 60 and non-volatile memory 62 and one or more programs 64. Computer 50 may include or have access to a computing environment that includes a variety of computer-readable media, such as volatile memory 60 and non-volatile memory 62, removable storage 56 and non-removable storage 58. Computer storage includes random access memory (RAM), read only memory (ROM), erasable programmable read-only memory (EPROM), electrically erasable programmable read-only memory (EEPROM), flash memory or other memory technologies, compact disc read-only memory (CD ROM), Digital Versatile Disks (DVD) or other optical disk storage, magnetic cassettes, magnetic tape, magnetic disk storage or other magnetic storage devices, or any other medium capable of storing computer-readable instructions. Computer 50 may include or have access to a computing environment that includes input 66, output 68, and a communication connection 70. Computer 50 may operate in a networked environment using communication connection 70 to connect to one or more remote computers, such as database servers. The remote computer may include a personal computer (PC), server, router, network PC, a peer device or other common network node, or the like. Communication connection 70 may include a Local Area Network (LAN), a Wide Area Network (WAN) or other networks.

Computer-readable instructions stored on a computer-readable medium are executable by processor unit 52 of computer 50. A hard drive, CD-ROM, and RAM are some examples of articles including a non-transitory computer-readable medium. For example, a computer program 64 capable of providing a generic technique to perform access control check for data access and/or for doing an operation on one of the servers in a component object model (COM) based system may be included on a CD-ROM and loaded from the CD-ROM to a hard drive. The computer-readable instructions allow computer 50 to provide generic access controls in a COM based computer network system having multiple users and servers.

Referring back to FIG. 2, RF circuit 24 of sensor device 18 may be paired with one or more of mobile devices 20. In one embodiment, multiple mobile devices 20 are paired with RF circuit 24 of sensor device 18. The ability to communicate with multiple devices allows for escalation of alerts. By way of example, first mobile device 20 could be associated with a primary caregiver and second mobile device 20 could be associated with a secondary caregiver.

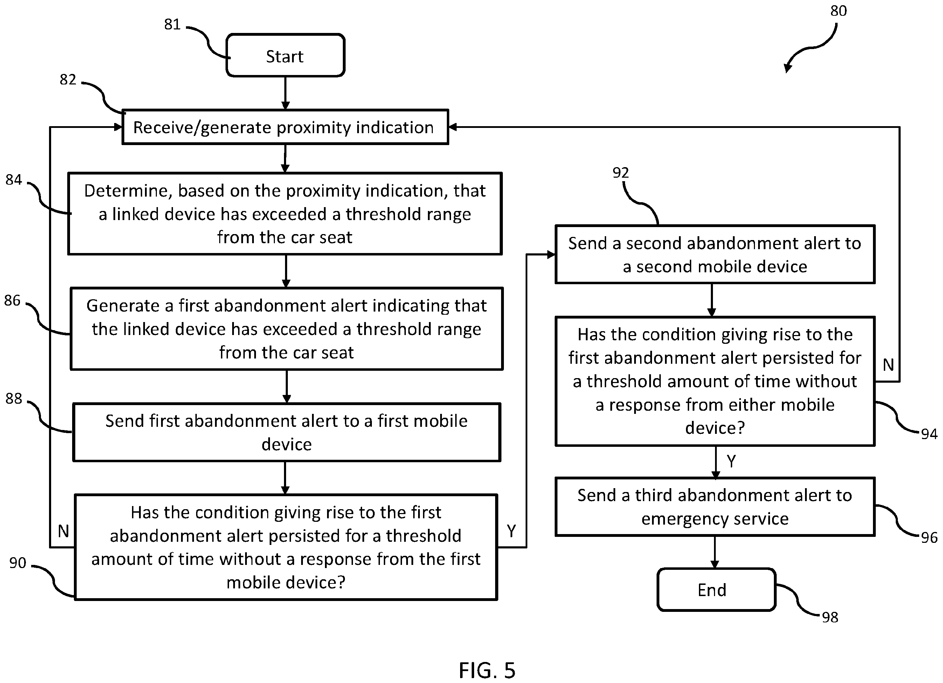

Referring now to FIG. 5, in the example described above and according to one method 80 of the present disclosure which starts at block 81, upon receiving a proximity indication, block 82, and determining based thereon that a linked device has exceeded a threshold range from the car seat, block 84, any alert(s) or signal(s) received or generated by the system, block 86, are first sent to mobile device 20 associated with the primary caregiver, block 88. If no response is detected from the primary caregiver and/or the condition giving rise to the alert/signal persists for a threshold amount of time, block 90, the method 80 proceeds to send an alert/signal to a mobile device 20 associated with a secondary caregiver, block 92, thereby escalating the alert. If the condition does not persist or the time threshold is not exceeded, control is returned to block 82. The above-mentioned alert/signals may take the form of a phone call, a text message, or any other indicia being provided to a mobile device 20.

In the event that no response continues to be detected from either the primary or the secondary caregiver and the condition giving rise to the alert/signal persists for another threshold amount of time, block 94, the method 80 may send a signal to an emergency service or public safety officials, block 96, such as by dialing 911 or sending a text to 911. Otherwise, control is returned to block 82. Such contact with public safety officials illustratively provides information that can be used to locate the vehicle/car seat. In one example, a message to public safety officials includes a description of the car, the nature of the conditions giving rise to the alert, and/or GPS coordinates of the car. In each described case, the method 80 illustratively includes a timer and preset or adjustable timing is set for when each additional level of contact (primary caregiver, secondary caregiver, public safety) is to be implemented. Still further, such timing can be impacted based on other sensors present. By way of example, the detection of an elevated temperature within the vehicle can be used to lessen the time threshold between one level of contact and another. The method 80 ends at block 98.

Referring back to FIG. 1, at least one of seat 12 and base 14 may include one or more indicator 100 thereon. Illustratively, the indicator is a bar code, QR code, or other such indicia that can be interpreted by a computing device. In another embodiment, the indicator is an RFID chip that is able to be detected by mobile device 20. By scanning the indicator, such as via a camera or RF reader within mobile device 20, the mobile device 20 is directed to obtain software (such as an application) to run on mobile device 20. In addition to an application suitable for running on mobile device 20, such indicator may direct a browser on mobile device 20 to a user manual for the system and/or installation instructions. Still further, in one example, indicator 100 is provided so that when interpreted by mobile device 20 (such as by an application running thereon) mobile device 20 is paired with at least one of seat 12 and base 14 on which indicator 100 is located such that any alerts issued related thereto are sent to mobile device 20. In such a manner, indicator 100 serves to link mobile device 20 to the system.

In yet another example, scanning indicator 100 on at least one of seat 12 and base 14 causes a warranty form or other form to auto-populate with product information such as a model number and/or serial number such that a user can easily register their product purchase. Still further, such scanning of indicator 100 can register the at least one of seat 12 and base 14 and allow a manufacturer to link such at least one of seat 12 and base 14 with mobile device 20 scanning the indicator 100. As such, any notices relevant to the system can be sent to mobile device 20. Examples of such notices include safety reminders and recall notices.

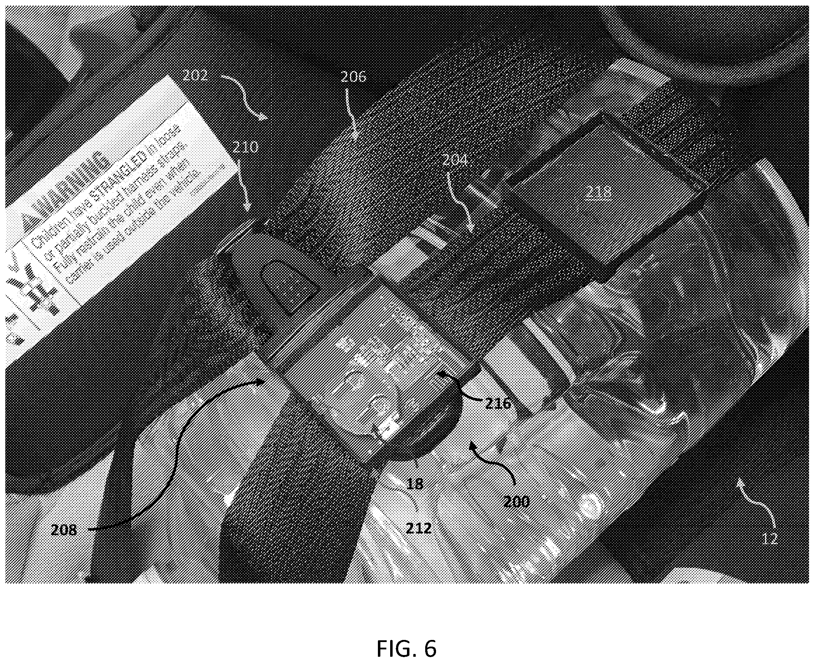

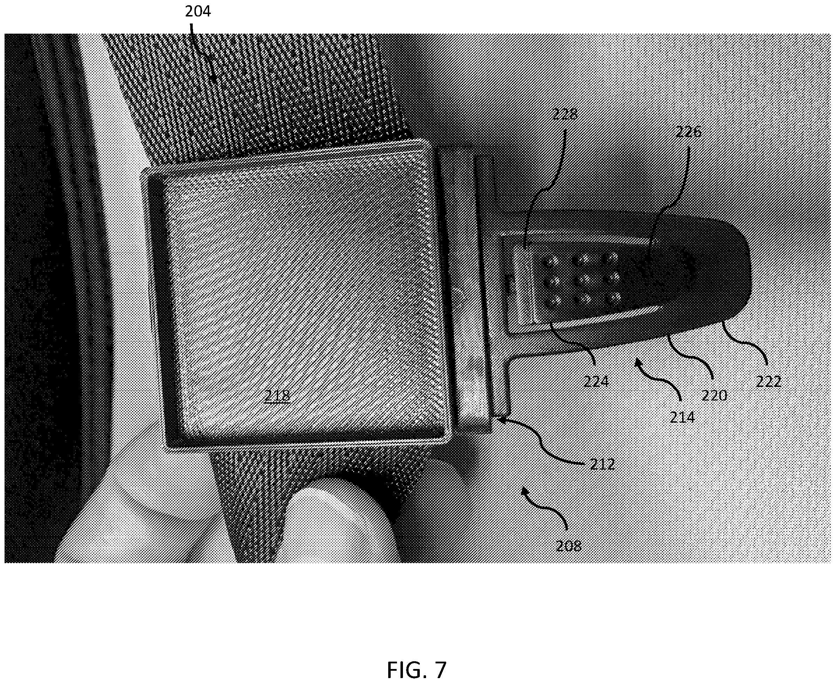

Now referring to FIGs. 6-10, another embodiment of a sensor device is shown. In this embodiment, sensor device 18 is integrated into a chest clip 200 of a child restraint harness 202. As shown in FIG. 6, harness 202 generally includes a first webbing 204, a second webbing 206 and chest clip 200 including sensor device 18. First webbing 204 and second webbing 206 are coupled to car seat 12 in a conventional manner (i.e., one end of each webbing passes through seat 12 above the shoulders of the child and another end of each webbing connects to a coupling mechanism between the child's legs). Webbings 204, 206 are coupled together at a location near the chest of the child by chest clip 200. Chest clip 200 generally includes a tongue 208 which slides onto webbing 204 and a buckle 210 which slides onto webbing 206. Tongue 208 generally includes a housing 212 and an extension 214 (FIG. 7) that projects from one side of housing 212. Housing 212 includes a circuit board 216 that includes the processor 22, transmitter/receiver 24 and power supply 26 discussed above. Tongue 208 further includes a cover 218 configured to slide onto housing 212 and protect circuit board 216.

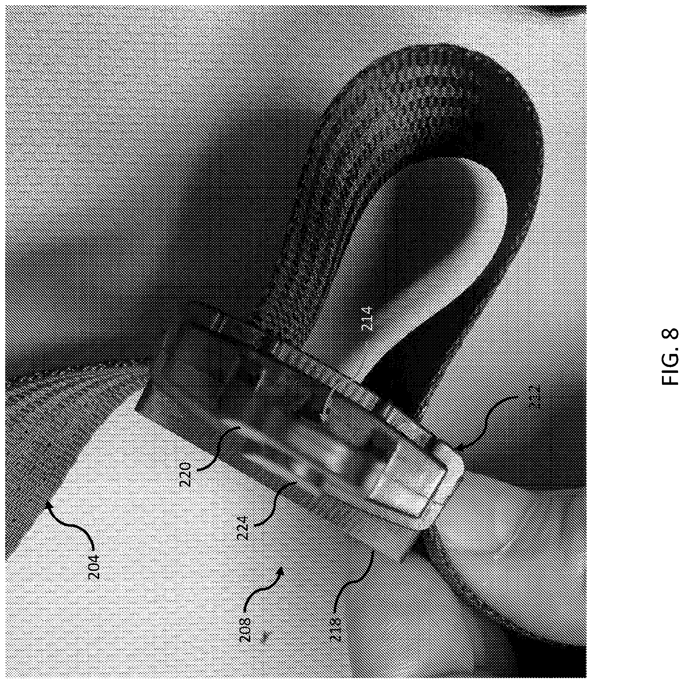

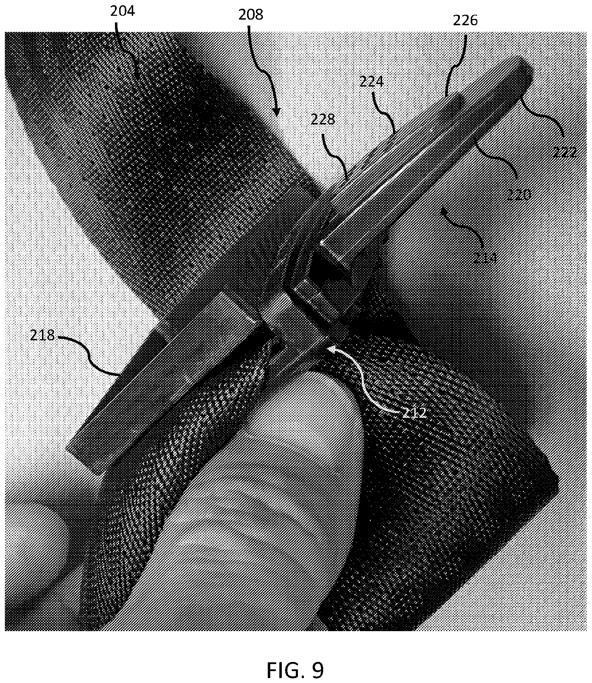

As best shown in FIG. 7, extension 214 of tongue 208 includes a body 220 that tapers from housing 212 to a distal end 222 of body 220. Depending from distal end 222 of body 220 is a latch 224 having a proximal end 226 and a distal end 228. As best shown in FIGs. 8 and 9, latch 224 extends above the main plane of extension 214 and inclines away from body 220 with distance from proximal end 226.

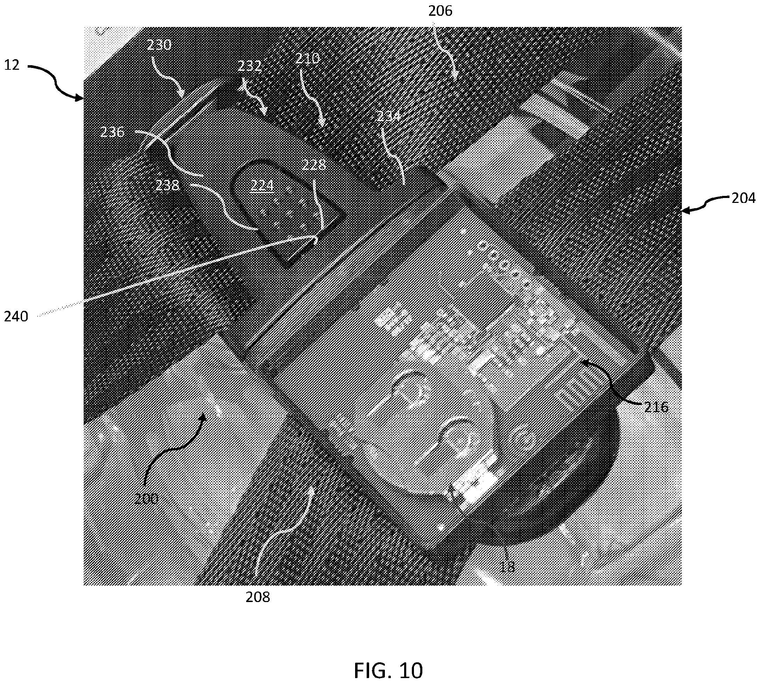

Buckle 210 is best shown in FIG. 10. Buckle 210 includes a housing 230 for receiving webbing 206 and a receptacle 232. Receptacle 232 includes an opened end 234 and a hollow body 236 with an opening 238 formed therein. The interior of body 236 is sized to receive body 220 of tongue 208 and opening 238 is sized to receive latch 224 of body 220. As will be apparent to those skilled in the art, after tongue 208 is attached to webbing 204 and buckle 210 is attached to webbing 206, chest clip 200 secures over the chest of a child in car seat 12 by inserting extension 214 of tongue 208 into body 236 of buckle 210 until latch 224 snaps into opening 238. Latch 224 is partially resilient, and compresses toward body 220 as latch 224 is moved into buckle 210. When connected as shown in FIG. 10, tongue 208 is retained in engagement with buckle 210 because distal end 228 of latch 224 engages the outer edge 240 of opening 238 and prevents lateral movement of tongue 208 away from buckle 210. Tongue 208 may be disengaged from buckle 210 by pressing latch 224 inwardly toward the chest of the child so that distal end 228 of latch 224 can clear edge 240 of opening 238, and then pulling tongue 208 laterally away from buckle 210.

In the embodiment of FIGs. 6-10 sensor device 18 is implemented on circuit board 216 of chest clip 200 rather than being incorporated into seat 12 or base 14 as described with reference to the previous embodiments. Implementation of sensor device 18 on chest clip 200 may reduce the interference in sensing the child as compared to other locations of sensor device 18 such as behind or under the child. It should be understood that in certain embodiments, webbings 204, 206 may be a standard size such that harness 202 (and chest clip 200 with sensing device 18) may be retrofit into existing car seats without a sensing device 18. It should be further understood that sensing device 18 of this embodiment may provide all of the functionality described above with reference to earlier embodiments.

While the above description has focused on car seats, car bases and harnesses, the above concepts lend themselves to many products in the childcare field. For example, cribs, crib mattresses, play yards, bassinets, and strollers all have implementations that can make use of the presence detection and caregiver alert. Still further, having indicia thereon that provides ready access to applications, user manuals, and alerts for safety reminders and recall notices have applicability across childcare product lines.

## Claims

1. A child car seat (12), comprising:
a base (14) configured to couple to a vehicle seat;
a seat configured to couple to the base; and
a sensor device (18) mounted to one of the base or the seat, the sensor device including a sensor (21) that outputs a measurement signal indicating whether a child is present in the seat, a processor (22) configured to receive the measurement signal and to determine, based on the measurement signal, whether a child is present in the seat, and a communication circuit (24) controlled by the processor, the communication circuit transmitting a proximity signal in response to the processor determining that a child is present in the seat, the proximity signal being configured for reception by a first mobile device (20);
wherein the proximity signal causes a first alert to be communicated to a user of a first mobile device in response to the first mobile device exceeding a range from the sensor device; and
wherein a second alert is communicated to the user of a second mobile device (20) if, after a first threshold amount of time, the measurement signal continues to indicate that a child is present in the seat and no response is received by the sensor device in response to the first alert;
wherein the seat comprises a harness (202) having a chest clip (200) with a tongue (208) and a buckle (210), the sensor device being housed within a housing (212) of the tongue;
wherein the processor is configured to receive an environmental measurement from an environmental sensor, the environmental sensor generating an environmental measurement representative of an environmental condition, and to determine whether the environmental measurement exceeds a maximum environmental measurement safety threshold; and
wherein the processor is configured to respond to a determination that the environmental measurement exceeds the maximum environmental measurement safety threshold by reducing the first threshold amount of time.

2. The child car seat of claim 1, wherein a third alert is communicated to an emergency service if, after a second threshold amount of time, the measurement signal continues to indicate that a child is present in the seat and no response is received by the sensor device in response to either the first alert or the second alert.

3. The child car seat of claim 1 or claim 2, wherein the sensor device is mounted to the base.

4. The child car seat of any preceding claim, further comprising an indicator (100) on at least one of the base and the seat, the indicator being detectable by the first mobile device, wherein detection of the indicator causes the first mobile device to obtain software that provides for linking the first mobile device to the sensor device.

5. The child car seat of claim 4, wherein linking the first mobile device to the sensor device provides for the first mobile device to receive safety information from a manufacturer of the car seat.

6. The child car seat of any preceding claim, wherein the sensor device is programmed to transmit an alert to a vehicle alarm system to generate a vehicle alarm.

7. The child car seat of any preceding claim, wherein the environmental measurement is at least one of a humidity measurement and a temperature measurement.

8. The child car seat of any preceding claim, wherein the communication circuit is configured to communicate based on a wireless communication standard.

9. The child car seat of claim 8, wherein the wireless communication standard is based on at least one of a BTLE standard, an IEEE 802.15.1 standard, and an IEEE 802.15.4 standard.

10. A method (80) for child car seat (12) proximity detection executing on a specifically programmed processor (22) coupled to the child car seat, comprising:
generating (82) a proximity indication representative of a proximity of a first mobile device (20) to the child car seat;
determining (84), based on the proximity indication, that the first mobile device has exceeded a threshold range from the child car seat;
generating (86) a first abandonment alert indicating that the first mobile device has exceeded the threshold range from the child car seat;
communicating (88) the first abandonment alert to the first mobile device;
determining (90) that a first threshold amount of time, during which the first mobile device continues to exceed the threshold range from the child car seat, has passed without a response from the first mobile device;
responding to a determination that the first threshold amount of time, during which the first mobile device continues to exceed the threshold range from the child car seat, has passed without a response from the first mobile device by communicating (92) a second abandonment alert to a second mobile device;
generating an environmental measurement representative of an environmental condition via an environmental sensor;
determining that the environmental measurement exceeds a maximum environmental measurement safety threshold; and
responding to a determination that the environmental measurement exceeds the maximum environmental measurement safety threshold by reducing the first threshold amount of time.

11. The method of claim 10, further comprising determining that a second threshold amount of time, during which the first mobile device continues to exceed the threshold range from the child car seat, has passed without a response from either the first mobile device or the second mobile device; and responding to a determination that the second threshold amount of time, during which the first mobile device continues to exceed the threshold range from the child car seat, has passed without a response from either the first mobile device or the second mobile device by communicating a third abandonment alert to an emergency service (96).

12. The method of claim 10 or claim 11, further comprising responding to a determination that the first threshold amount of time, during which the first mobile device continues to exceed the threshold range from the child car seat, has passed without a response from the first mobile device by generating an alert to a vehicle alarm system to generate a vehicle alarm.

13. The method of any of claims 10 to 12, wherein the proximity indication includes a received signal strength indicator (RSSI).

14. The method of any of claims 10 to 13, wherein the environmental measurement is at least one of a humidity measurement and a temperature measurement.

## Patentansprüche

1. Auto-Kindersitz (12), umfassend:
eine Basis (14), die dafür konfiguriert ist, mit einem Fahrzeugsitz zu koppeln;
einen Sitz, der dafür konfiguriert ist, mit der Basis zu koppeln; und
eine Sensorvorrichtung (18), die entweder an der Basis oder an dem Sitz angebracht ist, wobei die Sensorvorrichtung einschließt: einen Sensor (21), der ein Messsignal ausgibt, das angibt, ob sich ein Kind in dem Sitz befindet, einen Prozessor (22), der dafür konfiguriert ist, das Messsignal zu empfangen und auf der Grundlage des Messsignals zu bestimmen, ob sich ein Kind in dem Sitz befindet, und eine durch den Prozessor gesteuerte Kommunikationsschaltung (24), wobei die Kommunikationsschaltung als Reaktion darauf, dass der Prozessor bestimmt, dass sich ein Kind in dem Sitz befindet, ein Nähesignal überträgt, wobei das Nähesignal für den Empfang durch ein erstes Mobilgerät (20) konfiguriert ist;
wobei das Nähesignal bewirkt, dass als Reaktion darauf, dass das erste Mobilgerät eine Entfernung von der Sensorvorrichtung überschreitet, ein erster Alarm an einen Benutzer des ersten Mobilgeräts übermittelt wird; und
wobei ein zweiter Alarm an den Benutzer eines zweiten Mobilgeräts (20) übermittelt wird, wenn nach einer ersten Schwellenwert-Zeitspanne das Messsignal weiterhin angibt, dass sich ein Kind in dem Sitz befindet, und keine Reaktion von der Sensorvorrichtung als Reaktion auf den ersten Alarm empfangen wird;
wobei der Sitz ein Gurtsystem (202) umfasst, das einen Brustclip (200) mit einer Zunge (208) und einer Schnalle (210) aufweist, wobei die Sensorvorrichtung innerhalb eines Gehäuses (212) der Zunge untergebracht ist;
wobei der Prozessor dafür konfiguriert ist, einen Umgebungsmesswert von einem Umgebungssensor zu empfangen, wobei der Umgebungssensor einen Umgebungsmesswert erzeugt, der einen Umgebungszustand darstellt, und zu bestimmen, ob der Umgebungsmesswert einen maximalen Sicherheitsschwellenwert für den Umgebungsmesswert überschreitet; und
wobei der Prozessor dafür konfiguriert ist, auf eine Bestimmung, dass der Umgebungsmesswert den maximalen Sicherheitsschwellenwert für den Umgebungsmesswert überschreitet, durch Verringern der ersten Schwellenwert-Zeitspanne zu reagieren.

2. Auto-Kindersitz nach Anspruch 1, wobei ein dritter Alarm an einen Notdienst übermittelt wird, wenn nach einer zweiten Schwellenwert-Zeitspanne das Messsignal weiterhin angibt, dass sich ein Kind in dem Sitz befindet, und durch die Sensorvorrichtung keine Reaktion als Reaktion auf entweder den ersten oder zweiten Alarm empfangen wird.

3. Auto-Kindersitz nach Anspruch 1 oder Anspruch 2, wobei die Sensorvorrichtung an der Basis angebracht ist.

4. Auto-Kindersitz nach einem der vorhergehenden Ansprüche, ferner einen Indikator (100) an mindestens einem der Basis und des Sitzes umfassend, wobei der Indikator durch das erste Mobilgerät ermittelbar ist, wobei Ermittlung des Indikators das erste Mobilgerät veranlasst, eine Software zu erlangen, die für das Verknüpfen des ersten Mobilgeräts mit der Sensorvorrichtung sorgt.

5. Auto-Kindersitz nach Anspruch 4, wobei das Verknüpfen des ersten Mobilgeräts mit der Sensorvorrichtung dafür sorgt, dass das erste Mobilgerät Sicherheitsinformationen von einem Hersteller des Autositzes empfängt.

6. Auto-Kindersitz nach einem der vorhergehenden Ansprüche, wobei die Sensorvorrichtung dafür programmiert ist, einen Alarm an ein Fahrzeugalarmsystem zu übermitteln, um einen Fahrzeugalarm zu erzeugen.

7. Auto-Kindersitz nach einem der vorhergehenden Ansprüche, wobei der Umgebungsmesswert mindestens eines von einem Feuchtigkeitsmesswert und einem Temperaturmesswert ist.

8. Auto-Kindersitz nach einem der vorhergehenden Ansprüche, wobei die Kommunikationsschaltung dafür konfiguriert ist, auf der Grundlage eines Drahtlos-Kommunikationsstandards zu kommunizieren.

9. Auto-Kindersitz nach Anspruch 8, wobei der Drahtlos-Kommunikationsstandard auf mindestens einem von einem BTLE-Standard, einem IEEE 802.15.1-Standard und einem IEEE 802.15.4-Standard basiert.

10. Verfahren (80) zur Näheermittlung eines Auto-Kindersitzes (12), das auf einem speziell programmierten Prozessor (22) ausgeführt wird, der mit dem Auto-Kindersitz gekoppelt ist, umfassend:
Erzeugen (82) einer Näheangabe, die eine Nähe eines ersten Mobilgeräts (20) zu dem Auto-Kindersitz darstellt;
Bestimmen (84) auf der Grundlage der Näheangabe, dass das erste Mobilgerät eine Schwellenwertentfernung vom Auto-Kindersitz überschritten hat;
Erzeugen (86) eines ersten Verlassensalarms, der angibt, dass das erste Mobilgerät die Schwellenwertentfernung vom Auto-Kindersitz überschritten hat;
Übermitteln (88) des ersten Verlassensalarms an das erste Mobilgerät;
Bestimmen (90), dass eine erste Schwellenwert-Zeitspanne, während der das erste Mobilgerät weiterhin die Schwellenwertentfernung vom Auto-Kindersitz überschreitet, ohne eine Reaktion vom ersten Mobilgerät verstrichen ist;
Reagieren auf eine Bestimmung, dass die erste Schwellenwert-Zeitspanne, während der das erste Mobilgerät weiterhin die Schwellenwertentfernung des Auto-Kindersitzes überschreitet, ohne eine Reaktion vom ersten Mobilgerät verstrichen ist, durch Übermitteln (92) eines zweiten Verlassensalarms an ein zweites Mobilgerät;
Erzeugen eines Umgebungsmesswerts, der eine Umgebungsbedingung darstellt, mittels eines Umgebungssensors;
Bestimmen, dass der Umgebungsmesswert einen maximalen Sicherheitsschwellenwert für den Umgebungsmesswert überschreitet; und
Reagieren auf eine Bestimmung, dass der Umgebungsmesswert den maximalen Sicherheitsschwellenwert für den Umgebungsmesswert überschreitet, durch Verringern der ersten Schwellenwert-Zeitspanne.

11. Verfahren nach Anspruch 10, ferner umfassend: Bestimmen, dass eine zweite Schwellenwert-Zeitspanne, während der das erste Mobilgerät weiterhin die Schwellenwertentfernung des Auto-Kindersitzes überschreitet, ohne eine Reaktion entweder vom ersten Mobilgerät oder vom zweiten Mobilgerät verstrichen ist; und Reagieren auf eine Bestimmung, dass die zweite Schwellenwert-Zeitspanne, während der das erste Mobilgerät weiterhin die Schwellenwertentfernung des Auto-Kindersitzes überschreitet, ohne eine Reaktion entweder vom ersten Mobilgerät oder vom zweiten Mobilgerät verstrichen ist, durch Übermitteln eines dritten Verlassensalarms an einen Notdienst (96).

12. Verfahren nach Anspruch 10 oder Anspruch 11, ferner umfassend: Reagieren auf eine Bestimmung, dass die erste Schwellenwert-Zeitspanne, während der das erste Mobilgerät weiterhin die Schwellenwertentfernung des Auto-Kindersitzes überschreitet, ohne eine Reaktion vom ersten Mobilgerät verstrichen ist, durch Erzeugen eines Alarms zu einem Fahrzeugalarmsystem, um einen Fahrzeugalarm zu erzeugen.

13. Verfahren nach einem der Ansprüche 10 bis 12, wobei die Näheangabe einen Empfangssignalstärke-Indikator (RSSI) einschließt.

14. Verfahren nach einem der Ansprüche 10 bis 13, wobei der Umgebungsmesswert mindestens eines von einem Feuchtigkeitsmesswert und einem Temperaturmesswert ist.

## Revendications

1. Siège d'auto pour enfant (12), comprenant :
une base configurée pour se coupler à un siège de véhicule,
un siège configuré pour se coupler à la base, et
un dispositif de capteur (18) monté sur la base ou le siège, le dispositif de capteur incluant un capteur (21) qui délivre un signal de mesure indiquant si un enfant est présent dans le siège, un processeur (22) configuré pour recevoir le signal de mesure et pour déterminer, sur la base du signal de mesure, si un enfant est présent dans le siège, et un circuit de communication (24) commandé par le processeur, le circuit de communication émettant un signal de proximité en réponse à une détermination par le processeur qu'un enfant est présent dans le siège, le signal de proximité étant configuré pour être reçu par un premier appareil mobile (20),
dans lequel le signal de proximité engendre la communication d'une première alerte à un utilisateur d'un premier appareil mobile en réaction à un dépassement par le premier appareil mobile d'une distance vis-à-vis du dispositif de capteur, et
dans lequel une deuxième alerte est communiquée à l'utilisateur d'un second appareil mobile (20) si, après une première période de temps seuil, le signal de mesure continue à indiquer qu'un enfant est présent dans le siège et qu'aucune réponse n'est reçue par le dispositif de capteur en réponse à la première alerte,
dans lequel le siège comprend un harnais (202) comportant un fermoir de poitrine (200) doté d'une languette (208) et d'une boucle (210), le dispositif de capteur étant logé dans un logement (212) de la languette,
dans lequel le processeur est configuré pour recevoir une mesure d'environnement d'un capteur d'environnement, le capteur d'environnement générant une mesure d'environnement représentative d'un état d'environnement, et pour déterminer si la mesure d'environnement dépasse un seuil de sécurité maximal de mesure d'environnement, et
dans lequel le processeur est configuré pour réagir à une détermination que la mesure d'environnement dépasse le seuil de sécurité maximal de mesure d'environnement en réduisant la première période de temps seuil.

2. Siège d'auto pour enfant selon la revendication 1, dans lequel une troisième alerte est communiquée à un service d'urgence si, après une seconde période de temps seuil, le signal de mesure continue à indiquer qu'un enfant est présent dans le siège et qu'aucune réponse n'est reçue par le dispositif de capteur en réponse à la première alerte ou la deuxième alerte.

3. Siège d'auto pour enfant selon la revendication 1 ou 2, dans lequel le dispositif de capteur est monté sur la base.

4. Siège d'auto pour enfant selon l'une quelconque des revendications précédentes, comprenant en outre un indicateur (100) sur au moins l'un parmi la base et le siège, l'indicateur étant détectable par le premier appareil mobile, dans lequel une détection de l'indicateur engendre l'obtention, par le premier appareil mobile, d'un logiciel qui assure une connexion du premier appareil mobile au dispositif de capteur.

5. Siège d'auto pour enfant selon la revendication 4, dans lequel la connexion du premier appareil mobile au dispositif de capteur assure au premier appareil mobile de recevoir des informations de sécurité d'un fabricant du siège d'auto.

6. Siège d'auto pour enfant selon l'une quelconque des revendications précédentes, dans lequel le dispositif de capteur est programmé pour émettre une alerte vers un système d'alarme de véhicule afin de générer une alarme de véhicule.

7. Siège d'auto pour enfant selon l'une quelconque des revendications précédentes, dans lequel la mesure d'environnement est au moins une parmi une mesure d'humidité et une mesure de température.

8. Siège d'auto pour enfant selon l'une quelconque des revendications précédentes, dans lequel le circuit de communication est configuré pour communiquer sur la base d'une norme de communication sans fil.

9. Siège d'auto pour enfant selon la revendication 8, dans lequel la norme de communication sans fil est basée sur au moins une parmi une norme BTLE, une norme IEEE 802.15.1 et une norme IEEE 802.15.4.

10. Procédé (80) de détection de proximité à un siège d'auto enfant (12) s'exécutant sur un processeur (22) spécifiquement programmé (22) couplé au siège d'auto pour enfant, comprenant :
la génération (82) d'une indication de proximité représentative d'une proximité d'un premier appareil mobile (20) au siège d'auto pour enfant,
la détermination (84), sur la base de l'indication de proximité, que le premier appareil mobile a dépassé une distance seuil vis-à-vis du siège d'auto pour enfant,
la génération (86) d'une première alerte d'abandon indiquant que le premier appareil mobile a dépassé la distance seuil vis-à-vis du siège d'auto pour enfant,
la communication (88) de la première alerte d'abandon au premier appareil mobile,
la détermination (90) qu'une première période de temps seuil, durant laquelle le premier appareil mobile continue de dépasser la distance seuil vis-à-vis du siège d'auto pour enfant, s'est écoulée sans réponse de la part du premier appareil mobile,
la réaction, à une détermination que la première période de temps seuil durant laquelle le premier appareil mobile continue de dépasser la distance seuil vis-à-vis du siège d'auto pour enfant s'est écoulée sans réponse de la part du premier appareil mobile, par la communication (92) d'une deuxième alerte d'abandon à un second appareil mobile,
la génération d'une mesure d'environnement représentative d'une condition d'environnement par le biais d'un capteur d'environnement,
la détermination que la mesure d'environnement dépasse un seuil de sécurité maximal de mesure d'environnement, et
la réaction à une détermination que la mesure d'environnement dépasse le seuil de sécurité maximal de mesure d'environnement par une réduction de la première période de temps seuil.

11. Procédé selon la revendication 10, comprenant en outre la détermination qu'une seconde période de temps seuil, durant laquelle le premier appareil mobile continue de dépasser la distance seuil vis-à-vis du siège d'auto pour enfant, s'est écoulée sans réponse de la part du premier appareil mobile et du second appareil mobile, et
la réaction à la détermination que la seconde période de temps seuil durant laquelle le premier appareil mobile continue de dépasser la distance seuil vis-à-vis du siège d'auto pour enfant s'est écoulée sans réponse de la part soit du premier appareil mobile soit du second appareil mobile, par la communication d'une troisième alerte d'abandon à un service d'urgence (96).

12. Procédé selon la revendication 10 ou 11, comprenant en outre une réaction, à une détermination que la première période de temps seuil durant laquelle le premier appareil mobile continue de dépasser la distance seuil vis-à-vis du siège d'auto pour enfant s'est écoulée sans réponse de la part du premier appareil mobile, en générant une alerte vers un système d'alarme de véhicule pour générer une alarme de véhicule.

13. Procédé selon l'une quelconque des revendications 10 à 12, dans lequel l'indication de proximité inclut un indicateur d'intensité de signal reçu (RSSI).

14. Procédé selon l'une quelconque des revendications 10 à 13, dans lequel la mesure d'environnement est au moins une parmi une mesure d'humidité et une mesure de température.
